# DEMANDE DE BREVET EUROPEEN

(11) **EP 0 998 103 A1**
(43) Date de publication de la demande: **03.05.2000**
(21) Numéro de dépôt: 99203507.1
(22) Date de dépôt: 25.10.1999
(51) Int. Cl.: H04M 1/247

(54) **Appareil électronique comportant un écran et procédé pour afficher des rubriques d'un menu**

(30) Priorité: 30.10.1998 FR 9813699
(71) Demandeur: Koninklijke Philips Electronics N.V., 5621 BA Eindhoven (NL)
(72) Inventeur: Ringot, Nicolas, 75008 Paris (FR)
(74) Mandataire: Chaffraix, Jean

(57) **Abrégé**

Cet appareil électronique comporte :
- un écran (10) sur lequel une pluralité de rubriques (HDR, LIG1, LIIG2,... LIG4) d'un menu doit être affichée,
- des moyens de défilement (5) pour faire défiler lesdites rubriques dans un sens amont et/ou aval.

On a prévu une zone de mise en évidence (MO) qui est placée de telle manière qu'elle laisse la perception d'au moins une rubrique aval (LIG3, LIG4) ou amont (LIG1, HDR).

## Description

La présente invention concerne un appareil électronique comportant
- un écran sur lequel une pluralité de rubriques d'un menu doit être affichée,
- des moyens de défilement pour faire défiler lesdites rubriques dans un sens amont et/ou aval,
- des moyens de mise en évidence pour le choix d'un desdits menus.

L'invention concerne aussi un procédé pour afficher des rubriques.

De tels appareils sont bien connus et trouvent de nombreuses applications, notamment dans le domaine des postes téléphoniques portables. Un problème qui se pose avec ce genre d'appareils est qu'ils sont forcément de petite taille car ils doivent tenir dans la main, de ce fait il n'est pas possible de visualiser, sur un seul écran tous les items d'un menu qui peut en comporter beaucoup.

Le document de brevet des Etats-Unis d'Amérique n^{o} 5 761 610 décrit un tel appareil qui permet d'afficher. On propose de créer des sous-menus dérivés de menus principaux. Ceci oblige l'utilisateur à manoeuvrer souvent les commandes de ces menus.

La présente invention propose un appareil du genre mentionné dans le préambule dans lequel on a prévu des moyens pour faciliter la perception de ces rubriques susceptibles d'être affichées.

Pour cela, un tel appareil est remarquable en ce que le menu choisi occupe une place telle qu'il laisse la perception d'au moins une rubrique aval ou amont.

L' idée de l'invention est que l'utilisateur perçoit les rubriques avant et après leur mise en évidence de sorte que l'utilisateur se sent dans un plus grand confort avant de valider une rubrique. Cette sensation de confort a été vérifiée par la demanderesse par des essais.

La description suivante, faite en regard des dessins ci-annexés, le tout donné à titre d'exemple non limitatif, fera bien comprendre comment l'invention peut être réalisée.
La figure 1 montre un appareil conforme à l'invention.
La figure 2 montre le schéma de réalisation de l'appareil de la figure 1.
La figure 3 montre différentes configurations de l'écran selon l'invention.
La figure 4 montre un ordinogramme pour expliquer le fonctionnement de l'invention.

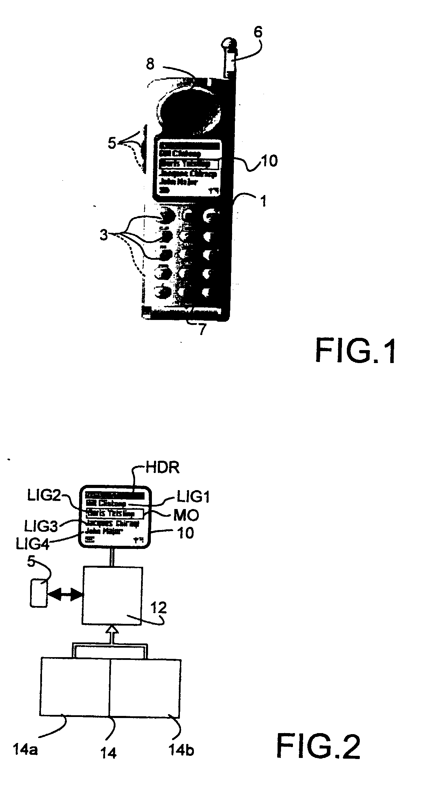

A la figure 1, on a représenté un appareil électronique conforme à l'invention. Cet appareil est formé à partir d'un boîtier 1 sur lequel sont disposés un clavier 3, un jeu de touches 5, une antenne 6, un microphone 7, un écouteur 8 et un écran 10 sur lequel différentes informations sont rendues perceptibles à l'utilisateur.

La figure 2 montre cet écran 10 avec son dispositif de commande d'affichage 12 associé qui permet d'utiliser différentes configurations d'écran. Ces configurations sont élaborées à partir d'informations issues d'une mémoire 14 associée à ce dispositif de commande 12. Cette mémoire comporte une partie 14a qui est la mémoire vive et une partie 14b dans laquelle sont stockées d'une part des instructions de commande qui définissent la configuration de l'écran 10 et d'autre part des rubriques des menus à visualiser sous la commande des touches 5. Sur l'écran sont portées des lignes de rubriques d'items LIG1, LIG2, LIG3 et LIG4 placées sous une ligne de rubrique d'en-tête HDR. Cette ligne HDR, pour se distinguer des lignes d'items est mise en évidence. Elle est mise dans le mode dit inversé, c'est-à-dire que les caractères sont dans une couleur différente de celle des caractères des lignes d'items. La ligne d'item susceptible d'être validée est mise en évidence, sur la figure, par un encadrement MO. Sous la commande des touches 5 il est possible de faire défiler les différentes lignes d'item selon un sens dit amont et un sens dit aval. L'amont est considéré comme le haut de l'écran et l'aval, le bas.

Selon l'invention, la mise en évidence d'une rubrique se situe en une position qui laisse toujours voir au moins une rubrique amont ou aval.

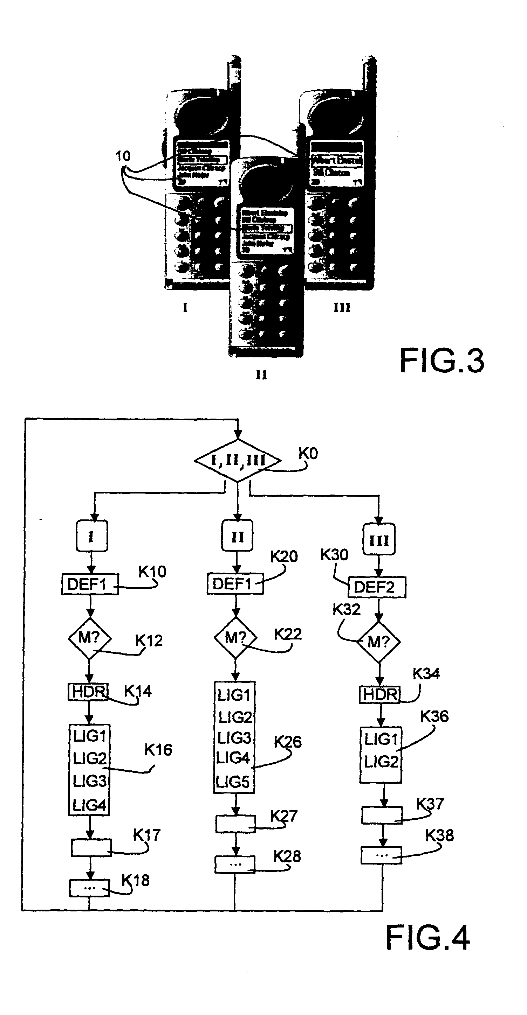

La figure 3 montre trois configurations possibles de l'écran selon des variantes de l'invention.

La configuration I montre une première configuration selon laquelle on a un en-tête et une pluralité de lignes de rubrique.

La configuration II montre le même écran que précédemment mais sans en-tête.

La configuration III montre la possibilité d'utiliser une fonction ZOOM. Dans cette dernière configuration, on peut aussi supprimer l'en-tête de façon à avoir plus de lignes de rubriques visibles.

La figure 4 montre un organigramme composé de différentes cases, destiné à l'explication du fonctionnement du contrôleur d'écran 12 pour la mise en oeuvre de l'invention.

La case K0 indique le choix des configurations que souhaite l'utilisateur. Il effectue ce choix en manipulant les touches 5, par exemple.

S'il choisit la configuration I il passe à la case K10. Cette configuration correspond à un affichage comportant un grand nombre de lignes, alors le contrôleur d'écran est mis dans sa définition maximale. La case K12 indique le menu à choisir par l'utilisateur. A la case K14 on affiche l'en-tête et à la case K16 quatre lignes de ce menu, d'autre lignes de rubrique de ce menu pouvant apparaître en les faisant défiler (scrolling). La case K17 indique l'affichage de la mise en évidence et la case K18 indique l'action à entreprendre si une rubrique a été validée.

S'il choisit la configuration Il il passe à la case K20. Cette configuration correspond aussi à un affichage comportant un grand nombre de lignes, alors le contrôleur d'écran est mis dans sa définition maximale. La case K22 indique le menu à choisir par l'utilisateur. A la case K26 on affiche cinq lignes de ce menu, puisqu'une ligne occupe l'emplacement de l'en-tête. Là aussi, d'autres lignes de rubrique de ce menu peuvent apparaître en les déroulant (scrolling). La case K27 indique l'affichage de la mise en évidence et la case K28 indique l'action à entreprendre si une rubrique a été validée.

S'il choisit la configuration III il passe à la case K30. Cette configuration correspond à un affichage comportant un petit nombre de lignes qui occupe une grande partie de l'écran (fonction ZOOM), alors le contrôleur d'écran est mis dans sa définition minimale c'est-à-dire qu'un point à afficher illumine plus de pixels à l'écran. La case K32 indique le menu à choisir par l'utilisateur. A la case K34 on affiche l'en-tête et à la case K36 deux lignes de ce menu, d'autres lignes de rubrique de ce menu pouvant apparaître en les déroulant (scrolling). La case K37 indique l'affichage de la mise en évidence, la case K38 indique l'action à entreprendre si une rubrique a été validée.

## Revendications

1. Appareil électronique comportant:
- un écran sur lequel une pluralité de rubriques d'un menu doit être affichée,
- des moyens de défilement pour faire défiler lesdites rubriques dans un sens amont et/ou aval,
- des moyens de mise en évidence pour le choix d'un desdits menus,
caractérisé en ce que le menu choisi occupe une place telle qu'il laisse la perception d'au moins une rubrique aval ou amont.

2. Appareil selon la revendication 1 pour lequel chaque menu comporte une rubrique d'en-tête et une pluralité de rubriques d'items, caractérisé en ce qu'il est prévu une commande de suppression de rubrique d'en-tête pour afficher une ligne d'item.

3. Appareil selon la revendication 2, caractérisé en ce qu'il est prévu une commande de zoom pour afficher sur l'écran des rubriques agrandies.

4. Procédé pour afficher des rubriques, mis en oeuvre dans un appareil selon l'une des revendications 1 à 3, caractérisé en ce qu'il comporte les étapes suivantes :
- affichage des rubriques depuis le haut vers le bas de l'écran,
- mise en évidence de l'une des rubriques tout en laissant une rubrique lisible soit vers le haut soit vers le bas.

5. Procédé selon la revendication 4 caractérisé en ce qu'il est prévu aussi une étape de défilement des rubriques placées sous la commande de l'utilisateur.
